# EUROPÄISCHE PATENTANMELDUNG

(11) **EP 2 361 943 A1**
(43) Veröffentlichungstag der Anmeldung: **31.08.2011**
(21) Anmeldenummer: 11167142.6
(22) Anmeldetag: 20.07.2007
(51) Int. Cl.: C08G 77/60, C01B 33/03

(54) **Polysilanverarbeitung und Verwendung**

(30) Priorität: 20.07.2006 DE 102006034061
(62) Teilanmeldung aus: 07786235.7
(71) Anmelder: Spawnt Private S.à.r.l., 1148 Luxembourg (LU)
(72) Erfinder: Auner, Gudrun, Annette, 61479, Glashütten (DE); Bauch, Christian, 06766, Bitterfeld-Wolfen (DE); Lippold, Gerd, 04179, Leipzig (DE); Deltschew, Rumen, 04319, Leipzig (DE)
(74) Vertreter: Epping - Hermann - Fischer

(57) **Zusammenfassung**

Die Erfindung betrifft ein Verfahren zur endproduktbezogenen Herstellung von nieder-, mittel- und hochmolekularen halogenierten Polysilanen, deren Destillation in ausgewählte Fraktionen, die direkte Abscheidung von Silizium aus der Gasphase oder einer Flüssigphase von Polysilangemischen oder Polysilanen, die Hydrierung oder Derivatisierung von halogenierten Polysilanen und die Verarbeitung zu Endprodukten in der bestimmungsgemäßen Anlage.

## Beschreibung

Die Erfindung betrifft ein Verfahren zur endproduktbezogenen Herstellung von halogenierten Polysilanen, deren Destillation, Hydrierung oder Derivatisierung und die Verarbeitung zu Endprodukten in der bestimmungsgemäßen Anlage.

Als Polysilane im Sinne des erfindungsgemäßen Verfahrens werden chemische Verbindungen bezeichnet, die sich durch mindestens eine direkte Bindung Si-Si auszeichnen. Polysilane können lineare Siₙ-Ketten und/oder Siₙ-Ringe enthalten sowie Kettenverzweigungen aufweisen.

Halogenierte Polysilane im Sinne des erfindungsgemäßen Verfahrens sind Polysilane, deren Substituenten weitgehend aus Halogenen X = F, Cl, Br, I sowie aus Wasserstoff bestehen. Halogenierte Polysilane im Sinne des erfindungsgemäßen Verfahrens sind wasserstoffarm mit einem Verhältnis H : X ≤ 1 : 5.

### Darstellung der Polysilane

Das halogenierte Polysilangemisch, das unter anderem zur Herstellung von Silizium dienen kann, wird in einem plasmachemischen Schritt aus SiX₄ und H₂ erzeugt. Dieses Verfahren ist in der Patentanmeldung Prof. Dr. Auner DE "Verfahren zur Herstellung von Silizium aus Halogensilanen" beschrieben PCT/DE 2006/00089. Die Plasmareaktion kann zum Beispiel mittels kontinuierlicher Anregung (continuous wave) durchgeführt werden:

Ein H₂/SiX₄-Dampf-Gemisch wird mittels eines elektrischen oder elektromagnetischen Wechselfeldes angeregt und in den plasmaförmigen Zustand überführt. Dabei entstehen je nach Reaktionsbedingungen flüssige, halbfeste oder feste Gemische halogenierter Polysilane.

Unter niedermolekularen Polysilanen werden Polysilane mit 2 bis 6 Siliziumatomen, unter mittelmolekularen Polysilanen Polysilane mit 7 bis 14 Siliziumatomen und unter hochmolekularen Polysilanen solche mit mindestens 15 Siliziumatomen verstanden. Die gewählten Gruppen unterscheiden sich hinsichtlich ihrer Weiterverarbeitungsmöglichkeiten durch Destillation, Hydrierbarkeit oder Derivatisierbarkeit.

Es erweist sich erfindungsgemäß als besonders vorteilhaft, die Reaktionsbedingungen in dem Plasmareaktor gezielt so zu steuern, dass nicht nur irgendein halogeniertes Polysilangemisch erzeugt wird, sondern das für die weitere Verarbeitung vorteilhafteste Polysilangemisch.

Die zur weiteren Verwendung vorgesehenen spezifischen halogenierten Polysilane lassen sich insbesondere über die Molekularmassen sowie weitere geeignete Bestimmungsverfahren eindeutig bestimmen. Es lassen sich niedermolekulare, mittelmolekulare und hochmolekulare halogenierte Polysilane herstellen und charakterisieren, wobei cyclisch aufgebauten Polysilanen ebenfalls Bedeutung hinsichtlich der Polymerisation zu langkettigen Polysilanen zukommt.

Es erweist sich als vorteilhaft, die im Plasmareaktor vorgesehene Plasmaquelle in mehreren Stufen vorzusehen und alle denkbaren Maßnahmen zum zielgerichteten Energieeintrag in ein möglichst kleines Raumvolumen mit einem möglichst homogenen Reaktionsgemisch vorzusehen.

Dieses ermöglicht einen hohen Durchsatz des Reaktionsgemisches bei weitestgehend homogenen Reaktionsbedingungen und damit auch weitgehend homogenen Reaktionsprodukten.

Entscheidend für ein möglichst homogenes Reaktionsprodukt ist es, den Energieeintrag in das zu erzeugende Reaktionsplasma so homogen wie möglich zu gestalten und in dem Plasma möglichst homogene Reaktionsbedingungen zu schaffen. Hier erweist es sich als vorteilhaft, nicht nur eine Plasmaanregung vorzusehen, sondern mehrere Plasmaanregungen, die von dem Reaktionsgemisch hintereinander durchlaufen werden.

Um einen möglichst gleichmäßigen Energieeintrag in das von dem Reaktionsgemisch ausgefüllte Raumvolumen zu erhalten, erweist es sich als vorteilhaft, die Plasmaquelle zu pulsen, um eine gleichmäßigere Anregung des Reaktionsgemisches zu erhalten.

Das gleiche Ziel der homogeneren Anregung kann erreicht werden, in dem das Reaktionsgemisch einem zusätzlichen Elektronenfluss zur Herbeiführung eines stabileren Plasmas beziehungsweise einer besseren Plasmazündung ausgesetzt wird.

Zusätzlich kann das Reaktionsgemisch durch außen an dem Reaktor angebrachte elektromagnetische Spulen gequencht werden, womit das Reaktionsplasma einer Kompression mit anschließender Expansion unterworfen wird. Hier wird erfindungsgemäß auch vorgesehen, dass das Reaktionsgemisch eine auf die Wellenlänge der Anregungsquelle abgestimmte Resonatorkammer durchläuft.

Es erweist sich als vorteilhaft, das Plasma zusätzlich einer sichtbaren oder ultravioletten Lichteinstrahlung auszusetzen, um selektiv Ionen oder Moleküle im Reaktionsgemisch anregen zu können.

Insbesondere kann das Plasma in dem Plasmareaktor zusätzlich mit Infrarot- oder sichtbarer- oder Ultraviolettstrahlung bestrahlt werden.

Entscheidend für einen kontinuierlichen Betrieb der Anlage ist, dass das Produktgemisch eine flüssige (zähflüssige) Konsistenz aufweist, damit es aus dem Reaktor herausfließen kann, um Verstopfungen zu vermeiden.

Die flüssige Konsistenz der erzeugten halogenierten Polysilangemische wird erreicht, in dem in dem Reaktor mit SiX₄-Überschuss und möglichst wenig H₂-Gehalt gefahren wird und die Temperatur des Reaktors unterhalb der Raumtemperatur gehalten wird.

ES ist daher vorteilhaft, dass die Molkonzentration von Wasserstoff im eingesetzten Gasgemisch kleiner ist als die Molkonzentration des SiX₄.

Die Charakterisierung der dargestellten Polysilane erfolgt am Beispiel einer chlorierten Polysilanmischung wie folgt:

Die maßanalytische Bestimmung des Chlorgehalts (Chlorid nach Mohr) einer in wässriger Lauge aufgelösten Probe liefert die empirische Formel SiCl₂₊ₓ für das Polysilangemisch, wobei x je nach mittlerer Kettenlänge zwischen 0 und 1 variiert, weshalb man auch von einem polymeren Dichlorsilylen sprechen kann, das aus Ringen (x=0) und Ketten (0<x≤1) besteht, wobei die Ketten mit -SiCl₃ Gruppen terminiert sind. Die Summenformel der Ringe lautet: SiₙCl₂ₙ und die der Ketten: SiₙCl₂ₙ₊₂.

EDX-Messungen bestätigen ein Atomverhältnis im Produkt von ca. Si:Cl = 1:2.

²⁹Si-NMR-Messungen zeigen, dass es sich bei dem Produkt je nach Erzeugungsbedingungen um ein komplexes Gemisch verschiedener chlorierter Polysilane handeln kann. Dabei liegen vorwiegend unverzweigte Verbindungen vor, wie das Fehlen von Signalen tertiärer (Cl-Si(SiR₃)₃) und quartärer (Si(SiR₃)₄) Siliziumatome belegt. ¹H-NMR-Messungen zeigen, dass das Produkt nur Spuren von Wasserstoff enthält (Si-H-Bindungen).

Die erhaltenen halogenierten Polysilangemische werden als niedermolekulare, mittelmolekulare und hochmolekulare Polysilane bezeichnet. Das niedermolekulare Polysilangemisch setzt sich vorwiegend aus Hexachlordisilan (Si:Cl = 1:3) und Octachlortrisilan S₃Cl₈ (Si:Cl = 1:2,67) zusammen. Diese beiden Komponenten können durch Destillation voneinander getrennt werden.

In einem weiteren Aspekt der Erfindung ist dieses auf ein Verfahren zur endproduktbezogenen Herstellung und Weiterverarbeitung von halogenierten Polysilangemischen zur Erzeugung von Silizium und/oder siliziumbasierten Produkten gerichtet, wobei je nach erzeugtem Polysilangemisch niedriger, mittlerer oder hoher Molmasse und gewünschtem End- und/oder Zwischenprodukt
- dieses halogenierte Polysilangemisch in der Gas- oder Flüssigphase entweder unmittelbar der weiteren Verarbeitung zugeführt wird oder
- in einer oder mehreren Destillationskolonnen in einzelne Fraktionen getrennt wird und die Destillate unmittelbar verarbeitet werden und weiteren Verarbeitungsschritten zugeführt werden, wie
- einer Hydrierung der halogenierten Polysilane oder
- einer Methylierung zwecks Erhalt von Organopolysilanen und
- das zur Weiterverarbeitung gelangende Polysilangemisch in seiner Zusammensetzung über die Regelung des Herstellungsprozesses und der Stoffflüsse gesteuert wird.

### Trennung des Polysilangemisches:

Aus dem Produktgemisch können z. B. durch Destillation einzelne Komponenten bzw. Fraktionen erhalten werden.
1. Hexachlordisilan entweicht zuerst bei einer Temperatur von ca. 144°C/1013 hPa, wobei auch schon bei der Polysilansynthese dampfförmig aus dem Gemisch abgetrennt und kondensiert (z. B. 0°C) werden kann.
2. Die nächste Fraktion bilden die niederen chlorierten Oligosilane, wie z. B. das Octachlortrisilan, das Decachlortrisilan und das Decachlorisotetrasilan.
3. Als Rückstand bleiben die Polysilane, deren Zersetzungstemperaturen unterhalb der Siedepunkte bei Normaldruck liegen.

Weiterhin können die vorwiegend niedermolekularen Polysilangemische einer Destillation zugeführt werden, um niedermolekulare halogenierte Polysilane wie zum Beispiel Si₂Cl₆ und Si₃Cl₈ in reiner Form zu erhalten.

Der Destillationsrest mit überwiegend mittleren Molmassen wie zum Beispiel Si₅X₁₂ oder Si₅X₁₀ kann dann einer unmittelbaren Weiterverarbeitung zugeführt oder in eine andere Destillationskolonne überführt werden.

Ebenso können die Polysilangemische mit vorwiegend unzersetzt destillierbaren Komponenten mittlerer Molmasse einer

Destillation zugeführt werden, um einzelne Komponenten in reiner Form und/oder Fraktion bestimmter Siedebereiche zu erhalten.

Die Destillate oder Destillationsrückstände mit überwiegend niederen oder hohen Molmassen können einer unmittelbaren Weiterverarbeitung zugeführt oder in eine andere Destillationskolonne überführt werden.

Andere Trennverfahren wie Vakuumdestillation, Sublimation, Chromatographie, selektive Kristallisation, selektives Lösen und Zentrifugation sind ebenfalls geeignet, die Polysilane unterschiedlicher Molmassen voneinander zu trennen.

### Hydrierung der Polysilane:

Durch Hydrierung der halogenierten Polysilane können teil- und perhydrierte Verbindungen erhalten werden, d. h. die Halogenatome sind teilweise oder vollständig durch Wasserstoffatome ersetzt. Die Hydrierung kann in inerten Lösungsmitteln wie Ethern, Toluol etc. durchgeführt werden, wobei als Hydrierungsmittel vor allem Metall- und Metalloidhydride geeignet sind. Besonders hervorzuheben sind hier das Natriumaluminiumhydrid und verschiedene Borhydride wie z. B. Natriumborhydrid. Bei der Hydrierung sollte bei möglichst niedrigen Temperaturen (RT oder tiefer) gearbeitet werden, um eine Zersetzung der gebildeten Polysilane zu unterdrücken.

Zweckmäßigerweise werden nur die gewünschten Fraktionen hydriert, so dass ein möglichst einheitliches Produkt/Produktgemisch erhalten wird.

Potentielle Anwendungen der dargestellten Polysilane:
1. Die vollständige Pyrolyse des Produktgemisches oder einzelner Komponenten (halogenierte Polysilane) führt zur Bildung von Silizium, welches z. B. für die Photovoltaik oder die Mikroelektronik verwendet werden kann, wenn zur Herstellung des Polysilans entsprechend reine Ausgangsverbindungen eingesetzt werden.
   Insbesondere können niedermolekulare halogenierte Polysilangemische unmittelbar aus der Gasphase zur Abscheidung von Silizium über eine erhitzte Oberfläche geleitet und dort pyrolytisch zersetzt werden.
   Es können flüssige halogenierte Polysilangemische oder deren Lösungen in geeigneten Lösungsmitteln auf Abscheideflächen aufgetragen und dort durch Pyrolyse zersetzt werden, wobei dort Silizium abgeschieden wird.
   Als Endprodukt können amorphe Siliziumdünnschichten auf beliebigen Trägerflächen erhalten werden.
   Das Silizium kann aus halogenierten Polysilangemischen oberhalb 400°C oder aus hydrierten Polysilanen oberhalb 200°C als beliebig dicke Schicht abgeschieden werden.
   Die abgeschiedenen Siliziumschichten können einer Wärmenachbehandlung unterzogen werden.
2. Nach destillativer Trennung des Produktgemisches können die Komponenten mit hohem Dampfdruck zur Abscheidung von Siliciumschichten (z. B. amorphes Si, mono- oder polykristallinem Silicium) aus der Gasphase auf geheizten Substraten und beliebigen Trägerflächen eingesetzt werden, wobei eine Wärmenachbehandlung je nach Trägermaterial induktiv oder durch Infrarotbestrahlung durchgeführt werden kann.
3. Hierzu eignen sich z. B. das Hexachlordisilan und die niederen Oligosilane, wobei Siliciumschichten bereits ab Temperaturen von 400-500°C sowohl in Gegenwart von H₂ auch ohne H₂ abgeschieden werden können. Hierzu werden die Substanzen dampfförmig, auch im Gemisch mit Trägergas (z. B. H₂), über das geheizte Substrat geleitet.
4. Die Komponenten mit geringem Dampfdruck können aus dem Produktgemisch heraus oder nach Abtrennung der Anteile mit höherem Dampfdruck ebenfalls zur Schichtabscheidung von Silicium genutzt werden, wenn sie in Substanz oder als Lösung auf ein heizbares Substrat aufgetragen und pyrolysiert werden.
5. Die Abscheidung von Silicium auf Substratoberflächen oder die Wärmenachbehandlung einer auf einem Substrat erzeugten Siliziumschicht kann zur Verbindungsbildung mit dem Substrat genutzt werden. So kann beispielsweise die Oberfläche von Metallsubstraten durch Erzeugung einer Metallsilicidschicht modifiziert werden, um eine erhöhte Abrasionsfestigkeit, größere Härte oder andere Oberflächenvergütung zu erreichen.
6. Durch Hydrierung des Produktgemisches oder einzelner Komponenten können vollständig oder teilweise hydrierte Polysilane erhalten werden, die sich besonders zur Abscheidung von Siliciumschichten auf Substraten bei niedriger Temperatur eignen, z. B. (SiH₂)ₙ → n Si + n H₂. Dabei können die leichtflüchtigen hydrierten Oligosilane für Abscheidungen aus der Gasphase verwendet werden. Die schwerer flüchtigen hydrierten Polysilane können dann unverdünnt oder als Lösung in inerten Lösemitteln (z. B. Toluol) auf einen Träger aufgebracht werden und durch geeignete Maßnahmen (z. B. Erhitzen, UV-Licht, etc.) unter Bildung einer Siliciumschicht zersetzt werden.
   Weiterhin können hochreine hydrierte Polysilane ausgewählter Molekularmassen in der Gasphase über erhitzte Oberflächen geleitet werden und sich auf diesen Oberflächen durch Pyrolyse Silizium abscheiden.
   Hydrierte Polysilane ausgewählter Molekularmassen können in der Flüssigphase oder in Lösung auf geeignete Oberflächen aufgetragen und durch Erhitzen zersetzt werden, wodurch sich auf diesen Oberflächen Silizium abscheidet.
   Als Endprodukt können amorphe Siliziumdünnschichten auf beliebigen Trägerflächen erhalten werden.
7. Durch Derivatisierung des Produktgemisches oder einzelner Komponenten lassen sich Organopolysilane erhalten, wie z. B. teil- oder permethylierte Verbindungen der allgemeinen Formeln SiₙXₐMe_{b} (a + b = 2n) und SiₙX_{c}Me_{d} (c + d = 2n + 2). Die Organopolysilane können dann, z. B. durch geeignete Kupplungsreaktionen (z. B. Wurtz-Kupplungen) in Polymere eingebaut oder auf bestehende Polymere aufgepfropft werden, um die besonderen optischen oder elektronischen Eigenschaften der Polysilanketten zu nutzen. In der anorganischen Synthesechemie sind verschiedene Methoden zur chemischen Umwandlung von unterschiedlich substituierten Polysilanen durch Kettenspaltung oder Ringöffnung sowie den partiellen Ersatz von Substituenten durch beispielsweise Halogene bekannt. Diese Methoden können auf das primäre Polysilangemisch, einzelne Fraktionen nach einer Auftrennung, abgetrennte reine Verbindungen oder Folgeprodukte der teilweisen oder vollständigen Substitution der Halogenatome in den entsprechenden Polysilanen angewendet werden. So lassen sich beispielsweise vollständig organosubstituierte cyclische Silane durch Ringöffnung in Ketten umwandeln, die nur an den Enden Halogensubstituenten tragen oder unter angepassten Bedingungen an vollständig organosubstituierten Cyclosilanen nur ein bzw. zwei Substituenten gegen Halogene austauschen, so dass das Ringsystem erhalten bleibt. Auch eine direkte Nutzung geeignet derivatisierter Polysilane, z. B. in Form dünner Schichten auf geeigneten Substraten, ist denkbar. Eine mögliche Verwendung der Organopolysilane liegt in der Herstellung von LED's.
   Insbesondere können die nach der Destillation erhaltenen Polysilane mit niederer, mittlerer und hoher Molmasse einer Methylierung zugeführt und teil- bzw. permethylierte Organopolysilane der Form SiₙXₐMe_{b}(a+b=2n) und SiₙX_{c}Me_{d}(c+d=2n+2) erhalten werden.
   Als Methylierungsmittel können metalloid- und/oder metallorganische Verbindungen, z. B. Methyllithium, Methylmagnesiumhalogenid, Dimethylzink, Tetramethylsilan verwendet werden.
8. Polysilane, die einzelne oder mehrere Wasserstoffsubstituenten enthalten, lassen sich durch Hydrosilylierung an C-C-Mehrfachbindungen addieren, so dass je nach Reaktionspartner und Reaktionsbedingungen Wasserstoffgegen Organosubstituenten ausgetauscht werden oder Copolymere mit organischen Verbindungen sowie Polysilan-Seitenketten an organischen Polymeren erzeugt werden.
9. Geeignete C-substituierte Polysilane erzeugen bei ihrem Einsatz als Precursoren Siliciumcarbid und geeignete Stickstoff-substituierte Polysilane erzeugen bei ihrem Einsatz als Precursoren Siliciumnitrid. Auf diese Weise sind nach angepasster Verarbeitung der Precursoren entsprechend auch Schichten aus Siliciumcarbid oder Siliciumnitrid zugänglich.
10. Nach Trennung (z. B. destillativ) können die halogenierten Polysilane auch als Feinchemikalien für Synthesen eingesetzt werden. So kann z. B. Hexachlordisilan, welches je nach Plasmabehandlung ein Hauptbestandteil des Produktgemisches ist, für Deoxygenierungsreaktionen in der Synthesechemie verwendet werden.

Das erfindungsgemäße Verfahren zur Verwendung von Polysilanen ist in 5 Zeichnungen dargestellt.

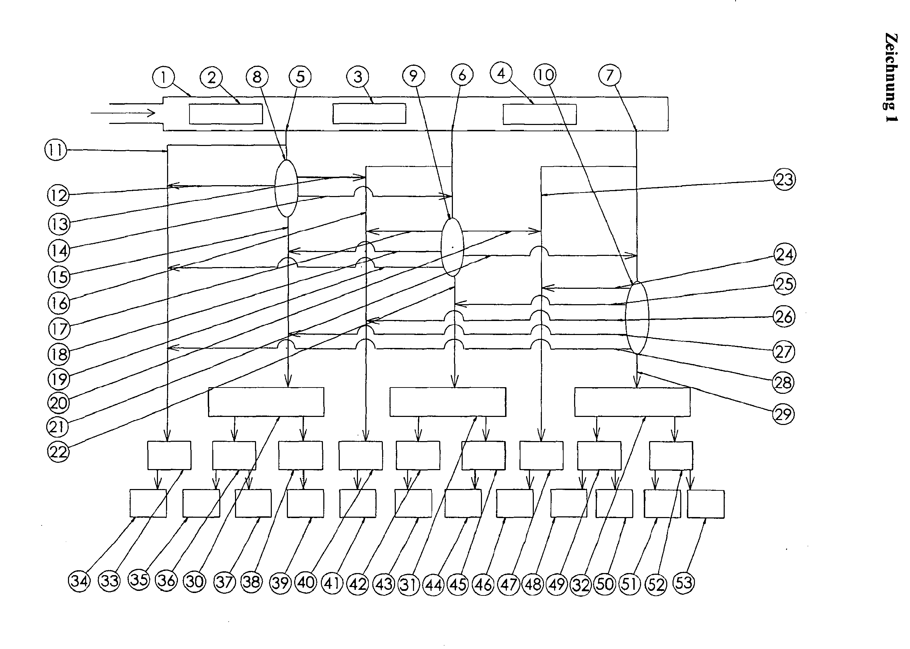

Zeichnung 1 stellt das gesamte Verfahrensschema zur Verarbeitung dar.

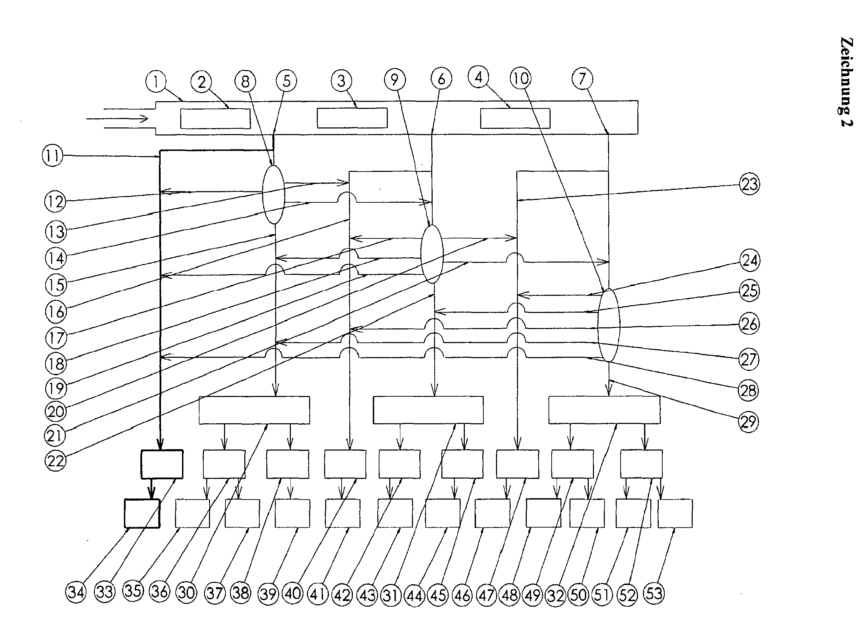

Zeichnung 2 stellt die Nutzung des Verfahrensschemas für die Abscheidung von Bulk-Silicium aus halogenierten Polysilanen kleiner Molmasse wie zum Beispiel Hexachlordisilan dar.

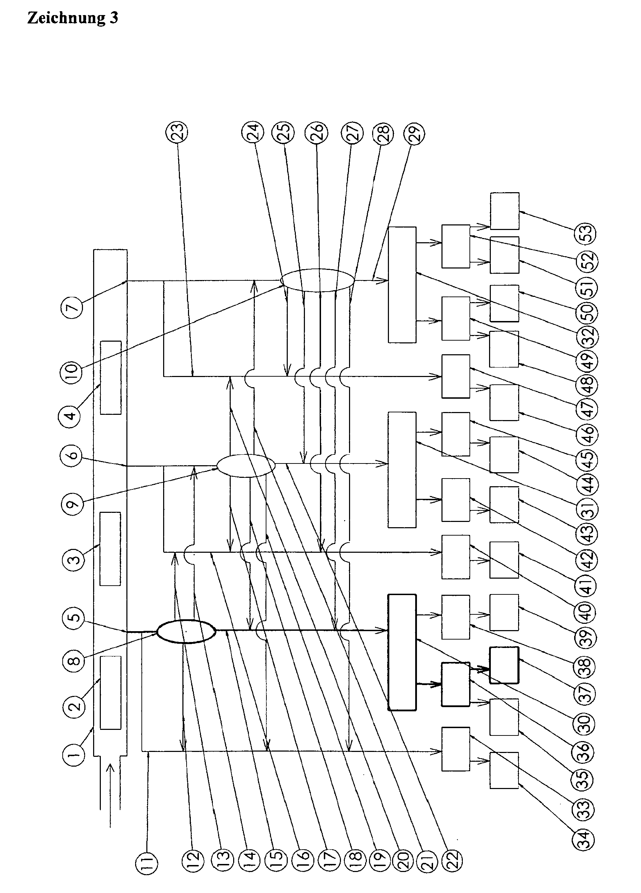

Zeichnung 3 stellt die Nutzung des Verfahrensschemas für die Hydrierung und die Abscheidung von Dünnschichtsilizium aus hydrierten Polysilanen kleiner Molmasse wie zum Beispiel Disilan dar.

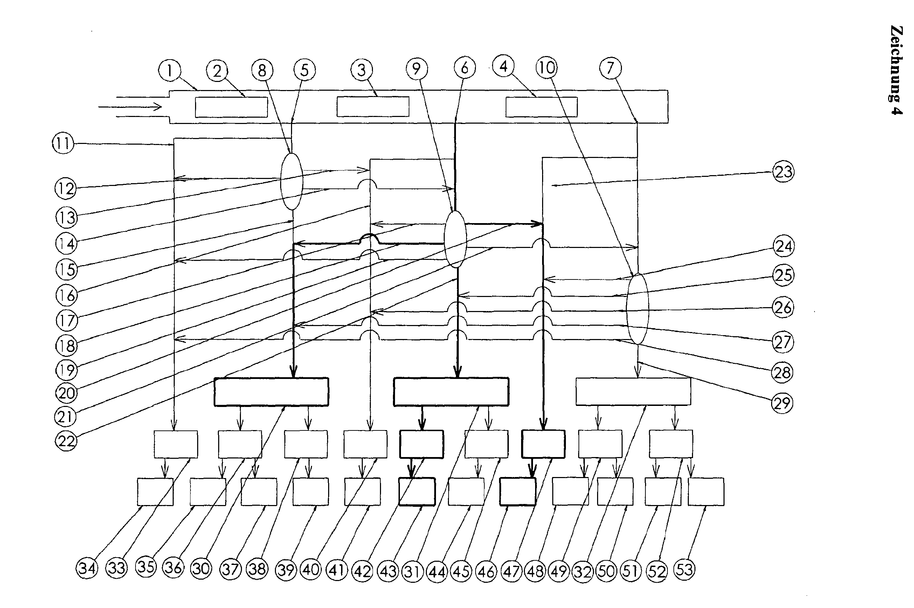

Zeichnung 4 stellt die Nutzung des Verfahrensschemas zur partiellen Methylierung halogenierter Polysilane mittlerer Molmasse wie zum Beispiel Decachlortetrasilan und die weitere Verarbeitung dieser Organochlorpolysilane durch die Wurtz-Kupplung dieser Organopolysilane an langkettige Polymere dar bei Rückführung der nieder- und hochmolekularen halogenierten Polysilane aus der Destillation in den Vorratsbehälter für nieder-/hochmolekulare Polysilane und die Abführung des hochmolekularen Destillationsrestes in die unmittelbare Abscheidung von Silicium.

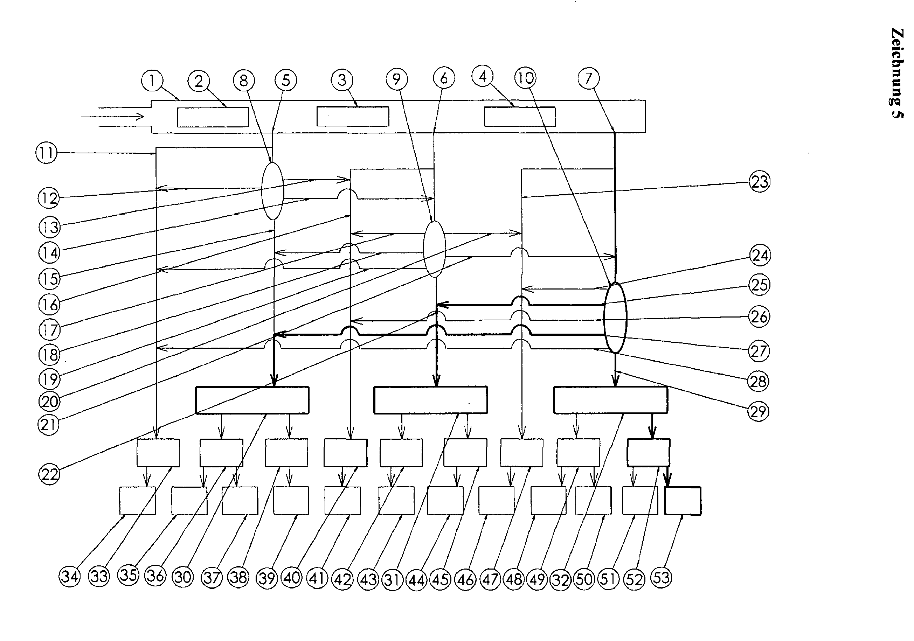

Zeichnung 5 stellt die Nutzung des Verfahrens zur Abtrennung von hochmolekularen halogenierten Polysilanen, deren Methylierung und anschließende Verarbeitung zu Organopolysilanen bei Rückführung der nieder- und mittelmolekularen Destillate in die jeweiligen Vorratsbehälter dar.

### Bezugszeichenliste:

1. Plasmareaktor
2. elektromagnetischer Hochfrequenzerzeuger I
3. elektromagnetischer Hochfrequenzerzeuger II
4. elektromagnetischer Hochfrequenzerzeuger III
5. Abführung vorwiegend niedermolekularer halogenierter Polysilane
6. Abführung vorwiegend mittelmolekularer halogenierter Polysilane
7. Abführung vorwiegend hochmolekularer halogenierter Polysilane
8. Destillation vorwiegend niedermolekularer halogenierter Polysilane
9. Destillation vorwiegend mittelmolekularer halogenierter Polysilane
10. Destillation vorwiegend hochmolekularer halogenierter Polysilane
11. Abführung undestillierter niedermolekularer halogenierter Polysilane
12. Abführung Destillationsrückstände
13. Abführung Destillationsrückstände
14. Abführung Destillationsrückstände
15. Abführung niedermolekularer Destillate
16. Abführung undestillierter mittelmolekularer halogenierter Polysilane
17. Abführung Destillationsrückstände
18. Abführung Destillationsrückstände
19. Abführung Destillationsrückstände
20. Abführung Destillationsrückstände
21. Abführung Destillationsrückstände
22. Abführung mittelmolekularer Destillate
23. Abführung undestillierter hochmolekularer halogenierter Polysilane
24. Abführung Destillationsrückstände
25. Abführung Destillationsrückstände
26. Abführung Destillationsrückstände
27. Abführung Destillationsrückstände
28. Abführung Destillationsrückstände
29. Abführung hochmolekularer Destillate
30. Vorratsbehälter niedermolekularer halogenierter Polysilane
31. Vorratsbehälter mittelmolekularer halogenierter Polysilane
32. Vorratsbehälter hochmolekularer halogenierter Polysilane
33. Vorratsbehälter vorwiegend niedermolekularer halogenierter Polysilangemische
34. Abscheidevorrichtung für Silicium aus niedermolekularen Polysilangemischen
35. Abscheidevorrichtung für Siliziumschichten aus gasförmigen niedermolekularen hydrierten Polysilanen
36. Hydrierungsreaktor
37. Speicherbehälter flüssiger niedermolekularer hydrierter Polysilane
38. Methylierungsreaktor
39. Speicherbehälter niedermolekularer Organopolysilane
40. Vorratsbehälter vorwiegend mittelmolekularer halogenierter Polysilangemische
41. Abscheidevorrichtung für Silizium aus mittelmolekularen Polysilangemischen
42. Hydrierungsreaktor
43. Abscheidevorrichtung für Siliziumschichten aus gasförmigen mittelmolekularen hydrierten Polysilanen
44. Speicherbehälter mittelmolekularer Organopolysilane
45. Methylierungsreaktor
46. Abscheidevorrichtung für Silizium aus hochmolekularen Polysilangemischen
47. Vorratsbehälter vorwiegend hochmolekularer halogenierter Polysilangemische
48. Abscheidevorrichtung für Siliziumschichten aus gasförmigen hochmolekularen hydrierten Polysilanen
49. Hydrierungsreaktor
50. Speicherbehälter flüssiger hochmolekularer hydrierter Polysilane
51. Speicherbehälter gasförmiger hochmolekularer Organopolysilane
52. Methylierungsreaktor
53. Speicherbehälter flüssiger hochmolekularer Organopolysilane

## Patentansprüche

1. Verfahren zur endproduktbezogenen Herstellung und Weiterverarbeitung von halogenierten Polysilangemischen zur Erzeugung von Silizium und/oder siliziumbasierten Produkten, **dadurch gekennzeichnet, dass** die halogenierten Polysilangemische plasmachemisch hergestellt werden und wobei die Temperatur des Plasmareaktors oder einzelner Komponenten unterhalb der Raumtemperatur gehalten wird und die Viskosität des erhaltenen Polysilangemisches durch das Mischungsverhältnis zwischen dem Wasserstoff- und dem Halogensilangehalt des Gasgemisches gesteuert wird.

2. Verfahren zur endproduktbezogenen Herstellung und Weiterverarbeitung von halogenierten Polysilangemischen gemäß Anspruch 1 **dadurch gekennzeichnet, dass** zur Steuerung der Zusammensetzung des Polysilangemisches einer oder mehrere Plasmareaktoren hintereinander von dem zugeführten Reaktionsgemisch aus Halogensilan und H₂ durchlaufen werden und die mittlere Molmasse des Polysilangemisches nach Durchlaufen eines jeden Plasmareaktors zunimmt.

3. Verfahren zur endproduktbezogenen Herstellung und Weiterverarbeitung von plasmachemisch hergestellten halogenierten Polysilangemischen gemäß Anspruch 1 oder 2 **dadurch gekennzeichnet, dass** zur Steuerung der Zusammensetzung des Polysilangemisches in einem Plasmareaktor mehrere Plasmaquellen vorgesehen und diese von dem Reaktionsgemisch durchlaufen werden und nach jeder Plasmaquelle in dem einen Plasmareaktor die mittlere Molmasse des Polysilangemisches zunimmt.

4. Verfahren zur endproduktbezogenen Herstellung und Weiterverarbeitung von plasmachemisch hergestellten halogenierten Polysilangemischen gemäß Anspruch 1 bis 3 **dadurch gekennzeichnet, dass** je nach Anzahl der Plasmareaktoren oder der Plasmaquellen in einem Plasmareaktor Polysilangemische von vorwiegend niederer, mittlerer und hoher Molmasse erhalten werden, die einer Weiterverarbeitung zugeführt werden.

5. Verfahren zur endproduktbezogenen Herstellung und Weiterverarbeitung von plasmachemisch hergestellten halogenierten Polysilangemischen gemäß Anspruch 1 bis 4 **dadurch gekennzeichnet, dass** die in dem Plasmareaktor zum Einsatz kommenden Plasmaquellen gepulst werden.

6. Verfahren zur endproduktbezogenen Herstellung und Weiterverarbeitung von plasmachemisch hergestellten halogenierten Polysilangemischen gemäß Anspruch 1 bis 5 **dadurch gekennzeichnet, dass** das Plasma in dem Plasmareaktor periodisch durch ein zusätzliches elektromagnetisches Wechselfeld gequencht wird oder eine auf die Mikrowellenquelle abgestimmte Resonatorkammer durchläuft.

7. Verfahren zur endproduktbezogenen Herstellung und Weiterverarbeitung von plasmachemisch hergestellten halogenierten Polysilangemischen gemäß Anspruch 1 bis 6 **dadurch gekennzeichnet, dass** sich in dem Plasmareaktor Plasmapulsung und/oder zusätzliche elektrische Entladung und/oder Plasmaquenchen abwechseln.

8. Verfahren zur endproduktbezogenen Herstellung und Weiterverarbeitung von halogenierten Polysilangemischen gemäß Anspruch 1 bis 7 **dadurch gekennzeichnet, dass** die vorwiegend hochmolekularen Polysilangemische der Trennmethode der grössenselektiven Chromatographie unterworfen werden, um Polysilanfraktionen mit hohen mittleren Molmassen zu erhalten.

9. Verfahren zur endproduktbezogenen Herstellung und Weiterverarbeitung von halogenierten Polysilangemischen gemäß Anspruch 1 bis 8 **dadurch gekennzeichnet, dass** die Trennungsfraktion mit überwiegend niederen oder mittleren Molmassen einer unmittelbaren Weiterverarbeitung zugeführt oder in eine anderen Destillationskolonne überführt werden.

10. Verfahren zur endproduktbezogenen Herstellung und Weiterverarbeitung von halogenierten Polysilangemischen gemäß Anspruch 1 bis 9 **dadurch gekennzeichnet, dass** die nach der Destillation oder sonstigen Trennmethoden erhaltenen Polysilane mit niederer oder mittlerer oder hoher Molmasse einer Hydrierung unterworfen und teil- bzw. perhydrierte Verbindungen erhalten werden.

11. Verfahren zur endproduktbezogenen Herstellung und Weiterverarbeitung von halogenierten Polysilangemischen gemäß Anspruch 1 bis 10 **dadurch gekennzeichnet, dass** die Polysilangemische einer Hydrierung unterworfen werden, die in Ethern und/oder aromatischen Lösemitteln durchgeführt wird.

12. Verfahren zur endproduktbezogenen Herstellung und Weiterverarbeitung von halogenierten Polysilangemischen gemäß dem vorhergehenden Anspruch **dadurch gekennzeichnet, dass** als Hydrierungsmittel Metall- und Metalloidhydride eingesetzt werden, vorzugsweise Natriumaluminiumhydrid oder Natriumborhydrid.

13. Verfahren zur endproduktbezogenen Herstellung und Weiterverarbeitung von halogenierten Polysilangemischen gemäß Anspruch 10 oder 12 **dadurch gekennzeichnet, dass** die Hydrierung vorzugsweise bei Temperaturen unterhalb 20°C durchgeführt wird.

14. Verfahren zur endproduktbezogenen Herstellung und Weiterverarbeitung von halogenierten Polysilangemischen gemäß Anspruch 1 bis 13 **dadurch gekennzeichnet, dass** die nach der Destillation erhaltenen Polysilane mit niederer, mittlerer und hoher Molmasse einer Methylierung zugeführt und teil- bzw. permethylierte Organopolysilane der Form SiₙXₐMe_{b}(a+b=2n) und SiₙX_{c}Me_{d}(c+d=2n+2) erhalten werden.

15. Verfahren zur endproduktbezogenen Herstellung und Weiterverarbeitung von Polysilangemischen gemäß Anspruch 1 bis 14 **dadurch gekennzeichnet, dass** niedermolekulare halogenierte Polysilangemische unmittelbar aus der Gasphase zur Abscheidung von Silizium über eine erhitzte Oberfläche geleitet und dort pyrolytisch zersetzt werden.
